# EUROPEAN PATENT APPLICATION

(11) **EP 3 893 124 A1**
(43) Date of publication of application: **13.10.2021**
(21) Application number: 18942485.6
(22) Date of filing: 06.12.2018
(51) Int. Cl.: G06F 16/00, G06F 16/958, G06F 12/00

(54) **DATA MANAGEMENT METHOD, DATA MANAGEMENT SYSTEM, AND PROGRAM**

(71) Applicant: Hitachi, Ltd., Tokyo 100-8280 (JP)
(72) Inventor: FUKUMOTO, Kouhei, Tokyo 100-8280 (JP); MITSUYAMA, Satoshi, Tokyo 100-8280 (JP); NAGASATO, Akihiro, Tokyo 100-8280 (JP)
(74) Representative: MERH-IP Matias Erny Reichl Hoffmann Patentanwälte PartG mbB
(86) International application number: PCT/JP2018/044921
(87) International publication number: WO 2020/115864

(57) **Abstract**

A data management method in which a computer detects that a change has occurred to the data of a data source. The data management method includes: a first step in which the computer acquires data from the data source; a second step in which the computer analyzes the meaning of the acquired data in units of a column and stores the latest analysis result in a meaning storage unit; a third step in which the computer acquires the previous analysis result of the column from the meaning storage unit; a fourth step in which the computer compares the latest analysis result with the previous analysis result and determines that a change has occurred to the data when there is a difference; and a fifth step in which, when it is determined that a change has occurred to the data, the computer outputs the occurrence of the change and the difference.

## Description

### BACKGROUND

This invention relates to a technology for detecting a change to data.

ETL (extract, transfer, load) servers are becoming widespread. The ETL servers are configured to collect data from a data source, for example, a core system, an Internet of Things (IoT) device, or a sensor, and to write the data to a database or data warehouse (hereinafter referred to as "DWH") configured to perform analysis.

When a change or addition, for example, of a data item occurs on the data source side, an operation administrator on the data source side is required to notify an operation administrator of the ETL server of the change. As a technology for changing data, for example, JP 2003-280955 A is known.

In JP 2003-280955 A, there is disclosed a technology in which, when a redefinition of a record is changed on a general-purpose machine side, in order to again reflect the changed definition information of the record in the RDBMS record, an association between the database (extraction source) of the general-purpose machine and the items of the open-system RDBMS (extraction destination) is continued.

### SUMMARY

In the related-art example described above, in order to reflect a change to the data on the data source side in the data import definition of the ETL server, the administrator on the data source side is required to notify the administrator of the ETL server of the content of the change.

In a case in which a management organization on the data source side and a management organization on the ETL server are different organizations, when the management organization on the data source side updates the data source by itself, it may take a long time until the management organization of the ETL server knows of the change, and there may be a delay in the handling of the update.

Further, in a case in which the data source side is an IoT device or a sensor network, when the IoT device or sensor, for example, is updated by another management organization, there is a problem in that changes to the order of data items or changes to the data content, for example, cannot be grasped by the management organization of the ETL server unless the management organization on the data source side notifies of those changes.

Therefore, this invention has been made in view of the problem described above, and an object of this invention is to provide a system configured to support handling of additions, updates, and specification changes to a data source.

According to one aspect of the present invention, a data management method for detecting occurrence of a change to data of a data source. The method includes the first through fifth steps. In the first step, the computer acquires data from the data source. In the second step, the computer analyzes the meaning of the acquired data column-by-column and stores the result of this analysis in a meaning storage module. In the third step, the computer obtains the previous analysis result of the column from a meaning storage module. In the fourth step, the computer compares the results of this time analysis with the results of the last time analysis, and determines that a change has occurred in the data if there is a difference in the results of the last time analysis. In the fifth step, if the computer determines that a change has occurred in the data, it outputs the occurrence of the change and the contents of the difference.

According to at least one embodiment of this invention, changes to the specification of the data source can be detected on a column-by-column basis by analyzing and accumulating the meaning of data acquired from the data source, and comparing the analysis result of the last time with the analysis result of this time.

The details of at least one embodiment of a subject matter disclosed herein are set forth in the accompanying drawings and the following description. Other features, aspects, and effects of the disclosed subject matter become apparent from the following disclosure, drawings, and claims.

### BRIEF DESCRIPTION OF THE DRAWINGS

FIG. 1 is a block diagram for illustrating an exemplary configuration of a computer system according to a first embodiment of this invention.
FIG. 2 is a block diagram for illustrating an example of a configuration of the data check server according to the first embodiment of this invention.
FIG. 3 is a diagram for illustrating an example of processing of detecting a specification change performed in the data check server according to the first embodiment of this invention.
FIG. 4 is a diagram for illustrating an example of update processing performed in the data check server according to the first embodiment of this invention.
FIG. 5 is a flowchart for illustrating an example of processing of detecting a specification change performed in the data check server according to the first embodiment of this invention.
FIG. 6 is a flowchart for illustrating an example of processing of reflecting a specification change performed in the data check server according to the first embodiment of this invention.
FIG. 7 is a diagram for illustrating an example of a data specification change screen output by the data check server according to the first embodiment of this invention.
FIG. 8A is a diagram for illustrating an example of a mapping editing dialog output by the data check server according to the first embodiment of this invention.
FIG. 8B is a diagram for illustrating an example of a data specification change notification output by the data check server according to the first embodiment of this invention.
FIG. 9 is a flowchart for illustrating an example of update processing of the data model performed in the data specification change notification module according to the first embodiment of this invention.
FIG. 10 is a flowchart for illustrating an example of processing of updating the mapping information performed in the data model modification module according to the first embodiment of this invention.
FIG. 11 is a flowchart for illustrating an example of processing of modifying the mapping information performed in the mapping information modification module according to the first embodiment of this invention.
FIG. 12 is a flowchart for illustrating an example of processing of modifying the data model performed in the data model modification module according to the first embodiment of this invention.
FIG. 13 is a table for showing an example of data 500 of the data source 1 to be analyzed by the data check server according to the first embodiment of this invention.
FIG. 14 is a flowchart for illustrating an example of processing performed in the data meaning analysis module according to the first embodiment of this invention.
FIG. 15 is a table for showing an example of the feature amount table 700 of the data meaning storage module according to the first embodiment of this invention.
FIG. 16 is a flowchart for illustrating an example of processing performed in the data specification change detection module according to the first embodiment of this invention.
FIG. 17 is a flowchart for illustrating an example of determination processing for matching of the meanings of data performed in the data specification change detection module according to the first embodiment of this invention.
FIG. 18 is a table for showing an example of the column change table to be used by the data specification change detection module according to the first embodiment of this invention.
FIG. 19 is a flowchart for illustrating an example of processing performed in the data meaning analysis module according to a second embodiment of this invention.
FIG. 20 is a diagram for illustrating an example of the machine learning module configured to estimate the content of data for numerical value type data according to the second embodiment of this invention.
FIG. 21 is a diagram for illustrating an example of the machine learning module configured to estimate the content of data for date and time type data according to the second embodiment of this invention.
FIG. 22 is a table for showing an example of a character type data pattern according to the second embodiment of this invention.
FIG. 23 is a table for showing an example of the feature amount table according to the second embodiment of this invention.

### DETAILED DESCRIPTION OF THE PREFERRED EMBODIMENTS

Embodiments of this invention are described below with reference to the accompanying drawings.

### [First Embodiment]

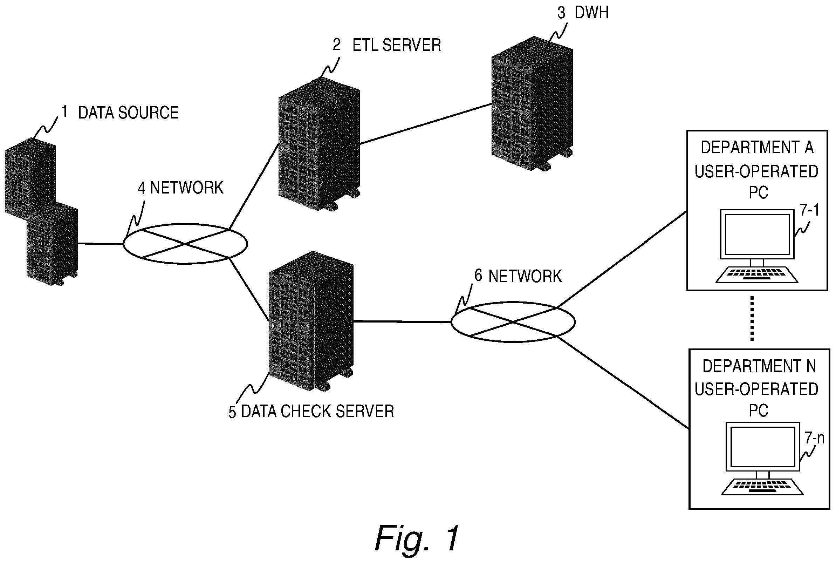

FIG. 1 is a system configuration diagram for illustrating an example of a computer system in a first embodiment of this invention. The computer system in the first embodiment includes an extract, transfer, load (ETL) server 2 configured to format and output data from a data source 1, a data warehouse (DWH) 3 configured to input the data formatted by the ETL server 2 and to perform predetermined processing on the data, a data check server 5 configured to detect a change to a data specification of the data source 1, and user-operated PCs 7-1 to 7-n each configured to receive a notification of the change to the data specification.

In the following description, when individual user-operated PCs 7-1 to 7-n are not specified, the reference symbol from "-" onwards is omitted and the user-operated PCs are denoted by reference symbol "7". The same applies to the reference symbols of other parts.

The computer system also includes a network 4 configured to couple the data source 1, the ETL server 2, and the data check server 5, and a network 6 configured to couple the data check server 5 and the user-operated PCs 7-1 to 7-n.

The data source 1 includes, for example, a database server of a core system, an Internet of Things (IoT) device, a sensor network, and is configured to provide data to be analyzed by the DWH 3.

The ETL server 2 is configured to acquire data from the database server of the core system, the IoT device, or the sensor network, format the data of the data source 1 based on predetermined mapping information (or aggregated information), and to output the formatted data in a format which can be used by the DWH 3.

The DWH 3 is configured to perform predetermined processing, for example, statistical processing and analysis processing, by using the data formatted by the ETL server 2. In the first embodiment, there is described an example in which various types of processing are performed in the DWH 3, but the various types of processing may be performed in the database server. Further, in the illustrated example, the ETL server 2 and the DWH 3 are directly coupled, but in actual practice, the DWH 3 is coupled to the ETL server 2 and the data check server 5 via the network 4. The DWH 3 includes one or more computers.

The data check server 5 is configured to detect occurrence of a specification change by analyzing the data of the data source 1, and to transmit a notification of the data specification change to the user-operated PC 7 when a change to the data specification has occurred. The data specification change notification is composed of a data specification change screen like that described later, and includes the content of the change to the data specification change, a data model definition, and an ETL (aggregated information) definition.

The user-operated PC 7 can instruct, via the data specification change screen, the data check server 5 to determine or edit the data model and to reflect a change in the ETL definition. The data check server 5 transmits to the ETL server 2 and the DWH 3, and reflects in the ETL server 2 and the DWH 3, the ETL definition and the data model definition determined by the user-operated PC 7 in response to the change to the data specification.

Although not shown, the user-operated PC 7 is a computer including a processor, a memory, a network interface, an input/output apparatus, and an output apparatus (or display apparatus).

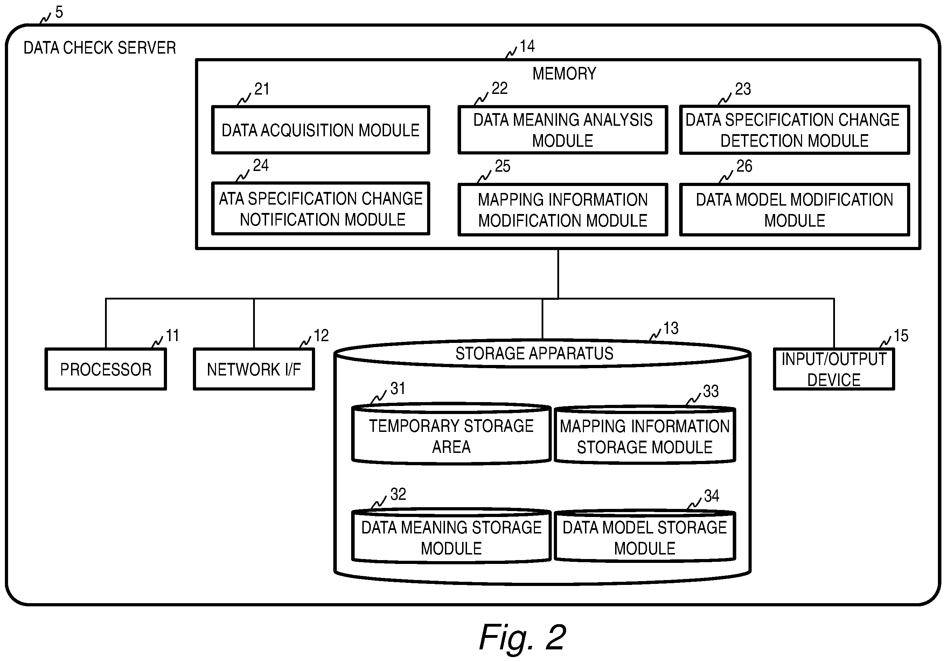

FIG. 2 is a block diagram for illustrating an example of a configuration of the data check server 5. The data check server 5 is a computer including a processor 11, a network interface 12, a storage apparatus 13, a memory 14, and an input/output apparatus 15.

The network interface 12 is coupled to each of the network 4 and the network 6. The input/output apparatus 15 includes an input apparatus, for example, a mouse, a keyboard, and a touch panel, and an output apparatus, for example, a display.

A data acquisition module 21, a data meaning analysis module 22, a data specification change detection module 23, a data specification change notification module 24, a mapping information modification module 25, and a data model modification module 26 are loaded onto the memory 14 as programs and are executed by the processor 11.

In the storage apparatus 13, a temporary storage area 31, a data meaning storage module 32, a mapping information storage module 33, and a data model storage module 34 are held.

The data acquisition module 21 is configured to acquire data from the data source 1 at a predetermined timing, and to store the acquired data in the temporary storage area 31. The data acquired by the data acquisition module 21 is the same as the data acquired by the ETL server 2, and the data to be acquired is set in advance. The predetermined timing is, for example, a timing when a command to acquire the data is received from the input/output apparatus 15 or the user-operated PC 7, or a timing when a preset period (for example, 24 hours) is reached.

The data meaning analysis module 22 is configured to read the data from the temporary storage area 31, calculate feature information on a column-by-column basis, and to analyze the meaning of the data (column) based on the feature information. The meaning of the analyzed data (data meaning) is stored in the data meaning storage module 32 as an analysis result of this time. The stored meaning data is accumulated by including the past data, and is used when the data specification change detection module 23 detects a specification change.

The data specification change detection module 23 is configured to detect a change to the data specification based on the analysis result (feature amount) of this time analyzed by the data meaning analysis module 22 and the analysis result of the last time. The data specification change notification module 24 is configured to output a specification change notification to the user-operated PC 7 when a change to the specification of the data of the data source 1 has occurred.

The mapping information modification module 25 is configured to modify, in accordance with an instruction from the data specification change notification module 24, mapping (mapping information) between the input data defined in the ETL server 2 and the items of the output destination data model.

The data model modification module 26 is configured to modify, in accordance with an instruction from the data specification change notification module 24, the item information on the output destination data model defined in the ETL server 2. In the first embodiment, the data model of the output destination of the ETL server 2 is the data model of the DWH 3.

The processor 11 is configured to operate as a functional unit configured to provide a predetermined function by performing processing in accordance with the program of each functional unit. For example, the processor 11 functions as the data meaning analysis module 22 by performing processing in accordance with a data meaning analysis program. The same applies to the other programs as well. Further, the processor 11 also operates as a functional unit configured to provide each function of a plurality of processes executed by each program. The computer and the computer system are an apparatus and a system including those functional units.

The data of the data source 1 collected by the data acquisition module 21 is stored in the temporary storage area 31 of the storage apparatus 13. The meaning (feature amount) of the data calculated by the data meaning analysis module 22 is stored in the data meaning storage module 32.

In the mapping information storage module 33, a correspondence relationship between the data and columns output by the data source 1 and the data and columns used by the DWH 3 is stored as mapping information. In the data model storage module 34, a format of the data used by the DWH 3 is stored as a data model.

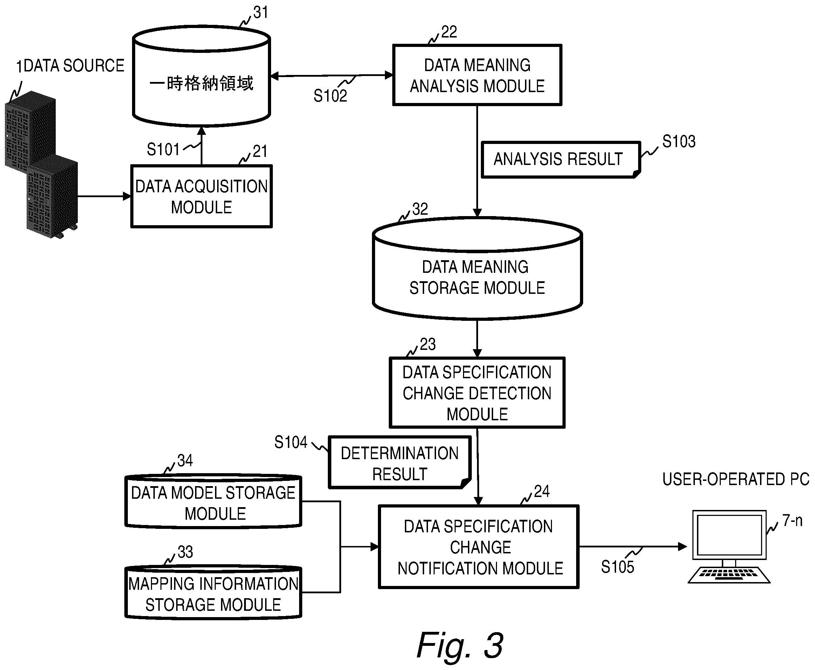

FIG. 3 is a diagram for illustrating an example of processing of detecting a specification change performed in the data check server 5.

In the data check server 5, the data acquisition module 21 acquires predetermined data from the data source 1 at a predetermined timing, adds identification information on the data source 1, and stores the acquired predetermined data including the added identification information in the temporary storage area 31 (Step S101).

The data acquired by the data acquisition module 21 from the data source 1 is the same as the data used by the ETL server 2. Further, the data stored in the temporary storage area 31 of the storage apparatus 13 is stored for a period of time determined in advance and used in the data meaning analysis module 22.

Next, the data meaning analysis module 22 reads the data (for example, past N records or past N days) required for analysis from the temporary storage area 31 (Step S102), and executes meaning analysis of the data in the manner described later. The analysis result of this time is stored in the data meaning storage module 32 (Step S103). The analysis of the meaning of the data is performed on a column-by-column basis, as described later. Further, information indicating, for example, the date and time or generation is added to the data to be stored in the data meaning storage module 32.

Next, the data specification change detection module 23 reads the analysis result of the last time from the data meaning storage module 32, compares the analysis result of this time with the analysis result of the last time on a column-by-column basis of the data, and detects changes to the data specification. When there is a difference between the analysis result of the last time and the analysis result of this time, the data specification change detection module 23 determines that a change to the data specification has occurred, and transmits the meaning analysis result of the data and the detection result to the data specification change notification module 24 (Step S104).

The data specification change notification module 24 adds, based on the received meaning analysis result and the detection result of the data specification change, the change to the existing data model of the data model storage module 34 and to the existing mapping information of the mapping information storage module 33, and notifies the user-operated PC 7-n of the data model after the specification change as mapping (Step S105).

The data model after the specification change is a data model in which an item definition of the data model of the output destination (DWH 3) has been changed in accordance with an addition, deletion, or change of the data column. Further, the mapping information after the specification change is mapping information in which the mapping definition of an item of the data model of the output destination (DWH 3) and a column of the input data has been changed in accordance with an addition, deletion, or switch in order of a data column.

The data specification change notification module 24 may generate update information on the processing content corresponding to the change in the mapping information and notify the user-operated PC 7-n of the update information. The data specification change notification module 24 may handle information including the mapping information and the processing content as aggregated information.

Through the processing described above, the data check server 5 acquires the data used by the ETL server 2 from the data source 1, analyzes the meaning of the data on a column-by-column basis, and detects the occurrence of a change to the data specification based on the analysis result of the meaning of the last-time data and the this-time data. When a change to the data specification has occurred, the data check server 5 can present a notification of the occurrence of the specification change, the data model after the specification change, and the mapping information to the user-operated PC 7.

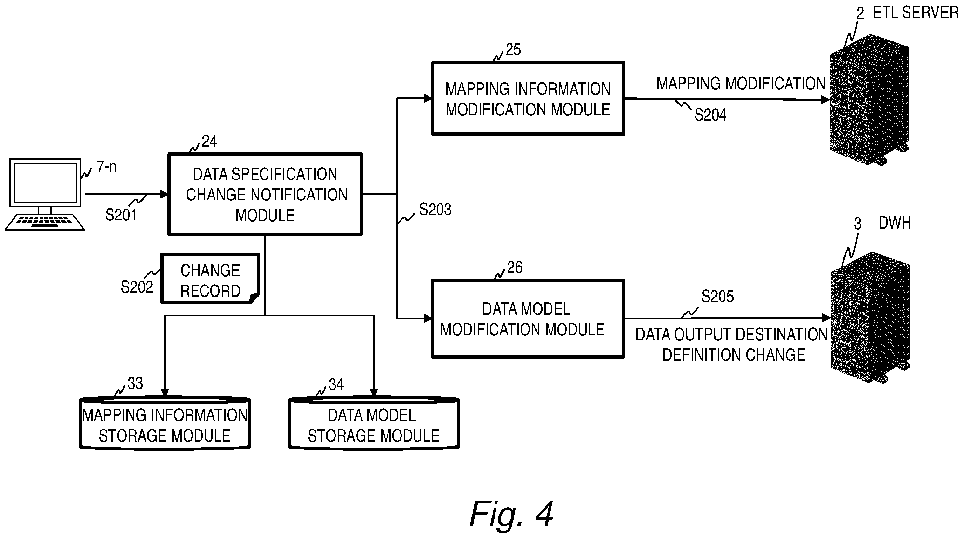

FIG. 4 is a diagram for illustrating an example of update processing performed in the data check server 5. The processing is executed based on a response from the user-operated PC 7 which has received a notification of the occurrence of a specification change.

On the user-operated PC 7 which has received the data specification change notification, a user checks the content of the specification change. When the user determines that the content of the specification change (data model after the specification change and mapping information or aggregated information) is correct, the user instructs the data check server 5 to provide feedback on the content of the change (Step S201).

The data specification change notification module 24 of the data check server 5 instructed by the user-operated PC 7 to reflect the content of the change updates the information by writing the data model after the specification change in the data model storage module 34 and writing the mapping information (or aggregated information) after the specification change in the mapping information storage module 33 (Step S202).

Next, the data specification change notification module 24 transmits the mapping information after the specification change to the mapping information modification module 25, and transmits the data model after the specification change to the data model modification module 26 (Step S203).

The mapping information modification module 25 transmits new mapping information (or aggregated information) to the ETL server 2 and updates the mapping information used by the ETL server 2 to the new mapping information (or aggregated information) (Step S204).

The data model modification module 26 transmits a new data model to the DWH 3 and updates the data model used by the DWH 3 to the new data model (Step S205).

Through the processing described above, when the data specification change notification module 24 receives a response from the user-operated PC 7, the data model and mapping information (aggregated information) after the specification change can be reflected in the DWH 3 and the ETL server 2.

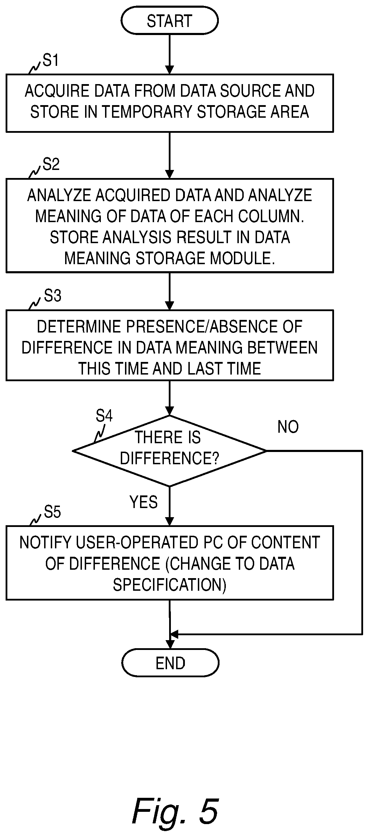

FIG. 5 is a flowchart for illustrating an example of processing of detecting a specification change performed in the data check server 5. This processing shows the details of the processing of FIG. 3.

In Step S1, the data acquisition module 21 of the data check server 5 acquires predetermined data from the data source 1 at a predetermined timing, adds the identification information on the data source 1, and stores the acquired predetermined data including the added identification information in the temporary storage area 31.

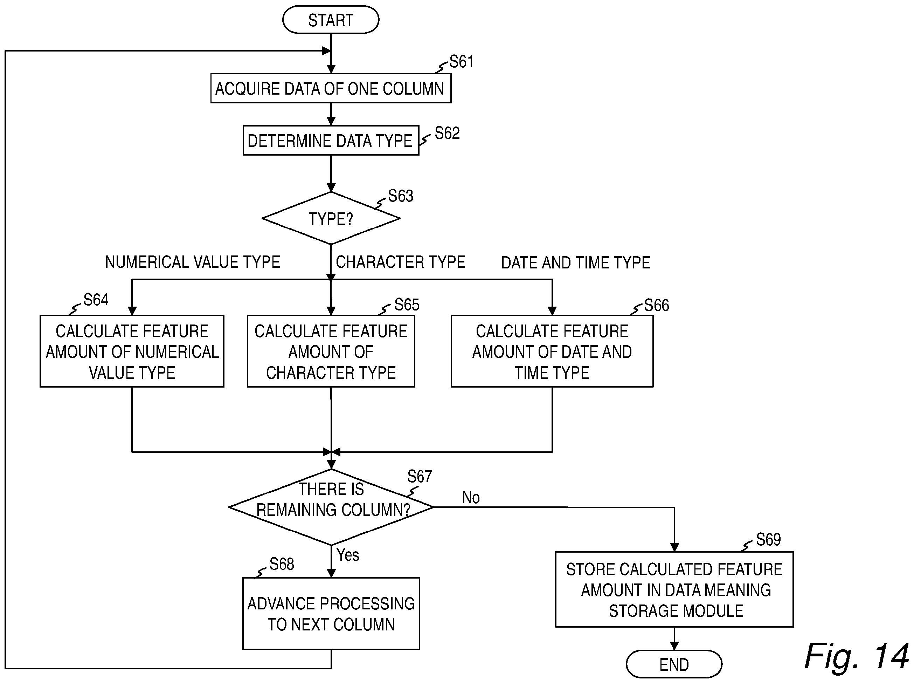

Next, in Step S2, the data meaning analysis module 22 reads the data to be analyzed from the temporary storage area 31, executes meaning analysis of the data on a column-by-column basis, and stores the analysis result in the data meaning storage module 32. This processing is described in detail with reference to FIG. 14.

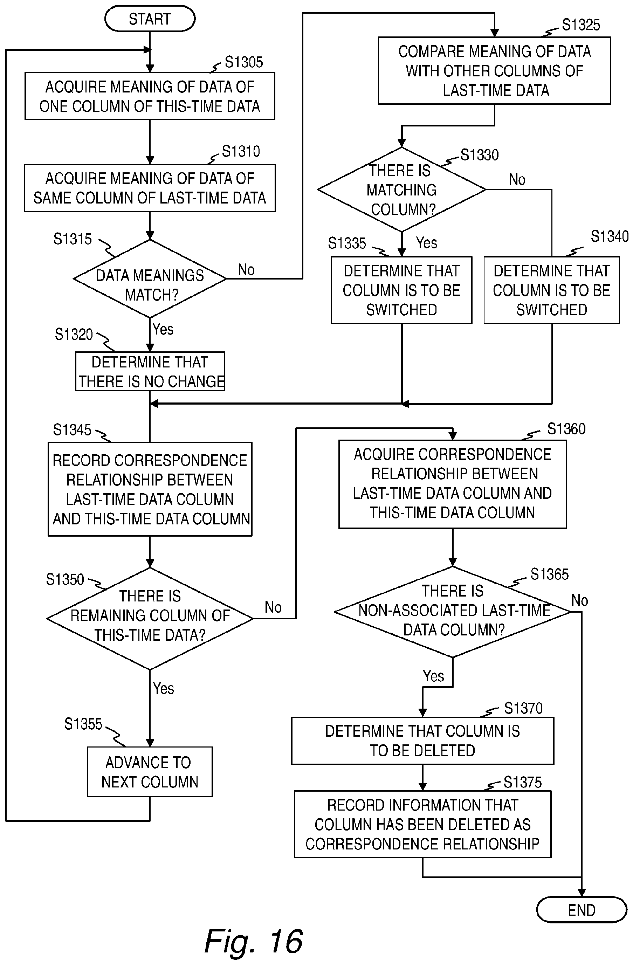

In Step S3, the data specification change detection module 23 acquires, for each column, the result of the meaning analysis of this time and the result of the meaning analysis of the last time from the data meaning storage module 32, and determines presence or absence of a difference. This processing is described in detail with reference to FIG. 16. When it is determined in Step S4 that there is a difference between the analysis result of the last time and the analysis result of this time, the processing advances to Step S5, and when there is no difference, the processing ends.

In Step S5, the data specification change notification module 24 adds, based on the detection result of the change to the data specification, the change to the existing data model and the mapping information acquired from the data model storage module 34 and the mapping information storage module 33, and notifies the user-operated PC 7 of the data model after the specification change as mapping.

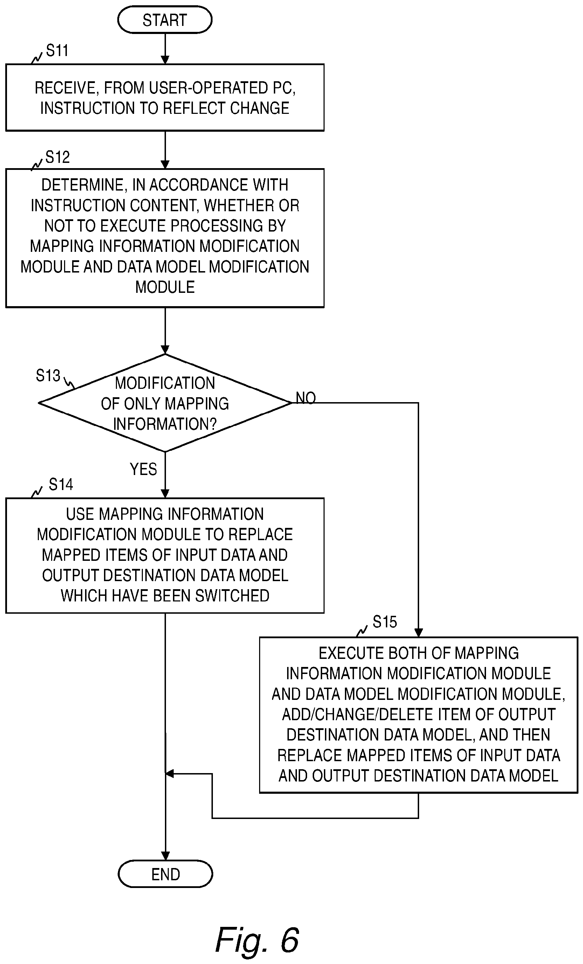

FIG. 6 is a flowchart for illustrating an example of processing of reflecting a specification change performed in the data check server 5. This processing shows the details of the processing of FIG. 4.

In Step S11, the data specification change notification module 24 receives from the user-operated PC 7 an instruction to reflect the change to the data specification. In Step S12, it is determined from the reflection instruction whether to perform processing by the data model modification module 26 or the mapping information modification module 25. In Step S13, when modification of only the mapping information is to be performed, the processing advances to Step S14, and when modification of the mapping information and the data model is to be performed, the processing advances to Step S15.

In Step S14, only the order of the data items has been switched, and therefore the mapping information modification module 25 is activated.

The mapping information modification module 25 modifies the mapping between the items of the data source 1 in which the order of the data items has been switched and the items of the output destination data model (input data of the DWH 3), and updates the mapping information by writing the modified mapping in the mapping information storage module 33. Further, the mapping information modification module 25 notifies the ETL server 2 of the updated mapping information, and the ETL server 2 updates the mapping information to the latest mapping information.

In Step S15, the order of the data items has been switched and the content of the columns has also changed, and therefore the processing is executed by the mapping information modification module 25 and the data model modification module 26.

First, the data model modification module 26 updates the data model of the data model storage module 34 by adding items to, changing items of, and deleting items from the output destination data model (input data of DWH 3). Further, the data model modification module 26 transmits the updated data model to the DWH 3, and the DHW 3 updates the mapping information to the new data model.

Next, in the same manner as in Step S14, the mapping information modification module 25 updates the mapping information of the mapping information storage module 33 and notifies the ETL server 2 of the updated mapping information.

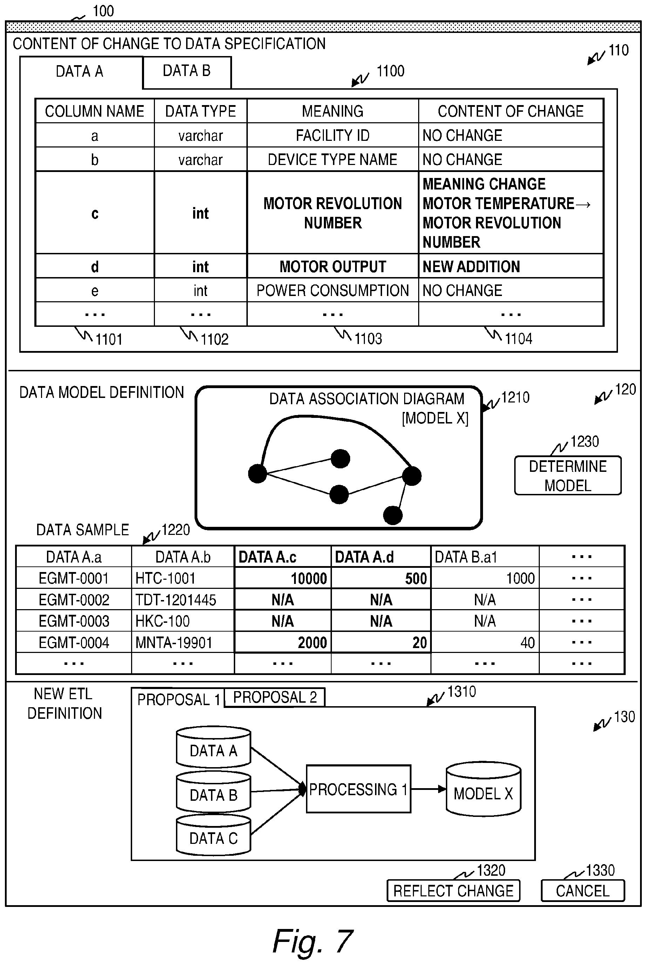

FIG. 7 is a diagram for illustrating an example of a data specification change screen 100 output by the data check server 5. The screen is displayed, for example, by the output apparatus of the user-operated PC 7 or the input/output apparatus 15 of the data check server 5.

The data specification change screen 100 includes a data specification change content display section 110 configured to display the content of the data specification change, a data model definition display section 120 configured to display a definition of the changed data model, and a new ETL definition display section 130 configured to display the changed ETL definition.

The data specification change content display section 110 displays difference information 1100 on the analysis result of this time and the analysis result of the last time of the data meaning storage module 32. The difference information 1100 includes, for each data identifier (in FIG. 7, A and B), one entry composed of a column name 1101, a data type 1102, a data meaning 1103, and a column change content 1104.

In the example illustrated in FIG. 7, the content of the column "c" of the data "A" has been changed from a motor temperature to a motor rotation number, and a motor output has been added to the column "d".

In the data specification change content display section 110, places at which there has been a specification change in the columns and the change content are clearly indicated. The columns in which there has been a change are also highlighted, and hence it is possible to recognize which places have been changed and how the places have been changed. The user can also edit the displayed content to edit the data specification.

In the data model definition display section 120, the definition of the data model of the output destination of the ETL server 2 is displayed as a data-association diagram 1210 and as a data sample 1220 which is combined together with the data-association diagram 1210. Further, a model determination button 1230 for the user to allow the changed data model is displayed in the data model definition display section 120.

In the data sample 1220, the data model after the specification change is displayed, and as the data model of the output destination, an example of a data model including columns "a" to "d" of the data A and column "a1" of the data B is displayed.

The data-association diagram 1210 displays a model showing associations among pieces of the data as a diagram. In the data-association diagram 1210, places at which there have been changes to the data associations and the changed content can be recognized, for example, by displaying added relationships in a highlighted manner and displaying deleted relationships as broken lines. The user can edit the data-association diagram 1210 to define a data model (data structure of data to be output destination of input data).

The new ETL definition display section 130 displays a processing and input/output model 1310 in the ETL server 2 after the specification change. Further, the new ETL definition display section 130 displays a reflect change button 1320 and a cancel button 1330 for receiving a new ETL definition.

In the model 1310 illustrated in FIG. 7, there is illustrated an example in which the ETL server 2 combines the columns of the data A, B, and C of the data source 1 by "processing 1" to generate the output destination data of a "model X".

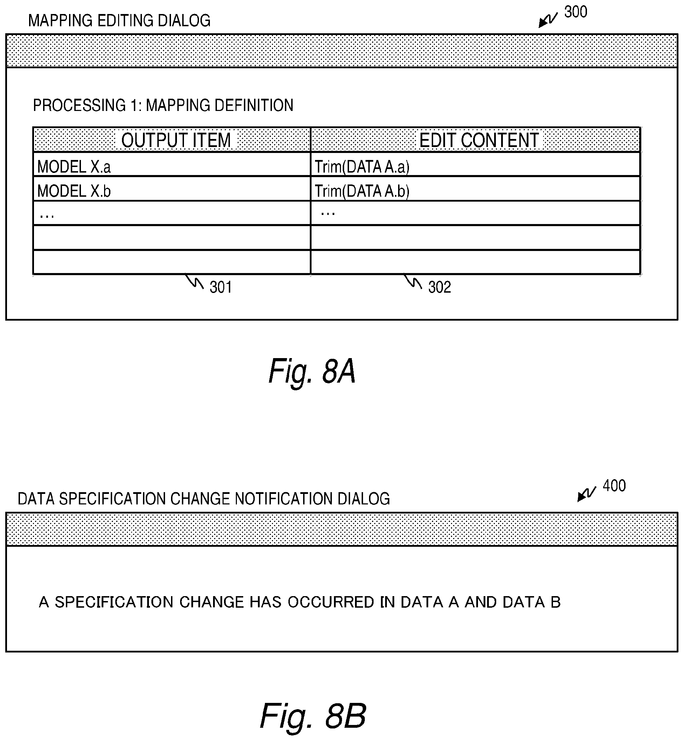

FIG. 8A is a diagram for illustrating an example of a mapping editing dialog 300 output by the data check server 5. This screen is displayed, for example, by the output apparatus of the user-operated PC 7 or the input/output apparatus 15 of the data check server 5 when the user clicks the data in the data sample 1220 of FIG. 7.

The mapping editing dialog 300 includes an output item 301 indicating a column of the specified data model, and an edit content 302 displaying the data and the column on the input data source 1 side to be input.

The user of the user-operated PC 7 can modify the mapping information on the data source 1 and the data model of the output destination by modifying the edit content 302. In the example illustrated in FIG. 8A, "model X.a" of the output item 301 indicates the column "a" of the data model X of the output destination, and "Trim" (data A.a) of the edit content 302 indicates information obtained by removing spaces from the content of the column "a" of the data A of the data source 1.

FIG. 8B is a diagram for illustrating an example of a data specification change notification 400 output by the data check server 5. This screen is displayed, for example, by the output apparatus of the user-operated PC 7 or the input/output apparatus 15 of the data check server 5.

The data specification change notification 400 is output from the data specification change notification module 24 when a change to the data specification is detected by the data specification change detection module 23. The data specification change screen 100 of FIG. 7 is displayed by clicking the data specification change notification 400 on the user-operated PC 7 or the input/output apparatus 15.

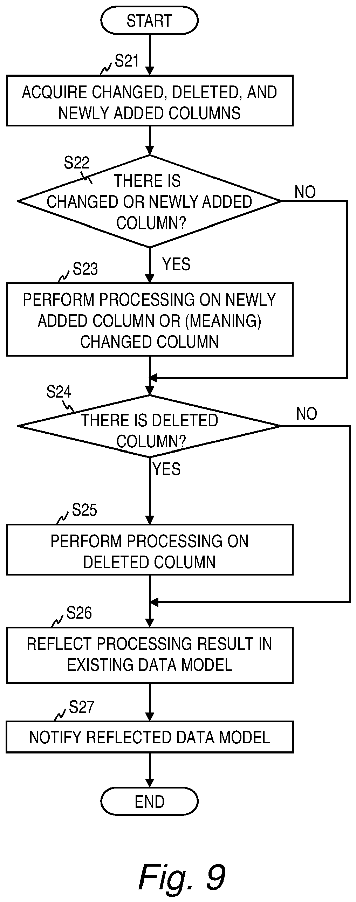

FIG. 9 is a flowchart for illustrating an example of update processing of the data model performed in the data specification change notification module 24.

In Step S21, the data specification change notification module 24 acquires the changed, deleted, or added columns from the data specification change detection module 23 based on the determination result obtained from the data specification change detection module 23.

In Step S22, the data specification change notification module 24 determines whether or not there is a column having a changed meaning or a newly added column. When there is a column having a changed meaning or a newly added column, the processing advances to Step S23, and when there is no column having a changed meaning or there is no newly added column, the processing advances to Step S24.

In Step S23, when it is detected that there is a newly added column or a column having a changed meaning, the data specification change notification module 24 evaluates the associations with the columns of other data, and detects the following addition or deletion of an association.
(1) Addition of a new association between the newly added column or changed column and a column of different data
(2) Deletion of an existing association between the changed column and a column of different data

In Step S24, the data specification change notification module 24 determines whether or not there is a deleted column. When there is a deleted column, the processing advances to Step S25, and when there is not a deleted column, the processing advances to Step S26.

In Step S25, the data specification change notification module 24 extracts the existing associations between the column corresponding to the detection result of the above-mentioned item (2) and the column of different data, and detects the association to be deleted.

In Step S26, the data specification change notification module 24 reflects the association detected in Step S23 and Step S25 in the data model stored in the data model storage module 34. In Step S27, the data specification change notification module 24 outputs, to the data specification change screen 100 (data-association diagram 1210 or data sample 1220) of FIG. 7, a data model reflecting the change, addition, or deletion.

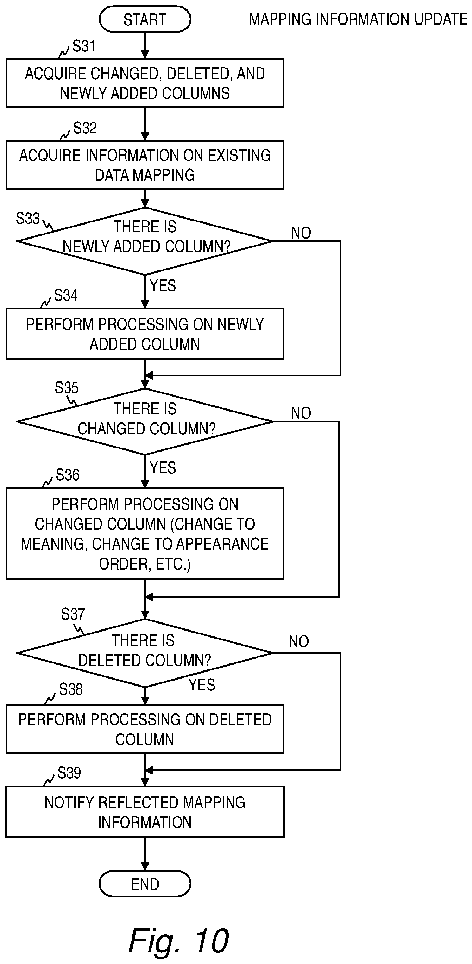

FIG. 10 is a flowchart for illustrating an example of processing of updating the mapping information performed in the data model modification module 26.

In Step S31, the data model modification module 26 acquires the changed, deleted, or added columns from the data specification change detection module 23. In Step S32, the data model modification module 26 acquires the existing mapping information corresponding to the column from the mapping information storage module 33.

In Step S33, the data model modification module 26 determines whether or not there is a new addition by a specification change. When there is a new addition, the processing advances to Step S34, and when there is no new addition, the processing advances to Step S35. In Step S34, the data model modification module 26 newly adds the input data items to the mapping information on the column, adds processing corresponding to the meaning of the newly added column, and adds the data items of a data model corresponding to the newly added column.

In Step S35, the data model modification module 26 determines whether or not there is a column which has been changed (for example, change to meaning or change to listed order) by a specification change. When there is a column which has been changed, the processing advances to Step S36, and when there is no column which has been changed, the processing advances to Step S37.

In Step S36, the data model modification module 26 changes (the order of) the input data items in the mapping information corresponding to the column changed by a specification change, changes to processing corresponding to the meaning of the changed column, and changes the items of the corresponding data model. The processing corresponding to the meaning of the changed column may be to notify the ETL server 2 that the meaning of the column has been changed.

In Step S37, the data model modification module 26 determines whether or not there is a column which has been deleted by a specification change. When there is a column which has been deleted, the processing advances to Step S38, and when there is no column which has been deleted, the processing advances to Step S39.

In Step S38, the data model modification module 26 deletes the relevant column from the input data items in the mapping information corresponding to the column deleted by a specification change, deletes or updates the processing relating to the deleted column, and deletes the data items of the corresponding data model.

In Step S39, the data model modification module 26 outputs the mapping information having the specification changed in Step S34, Step S36, and Step S38 to the model 1310 of the new ETL definition display section 130 of the data specification change screen 100 of FIG. 7.

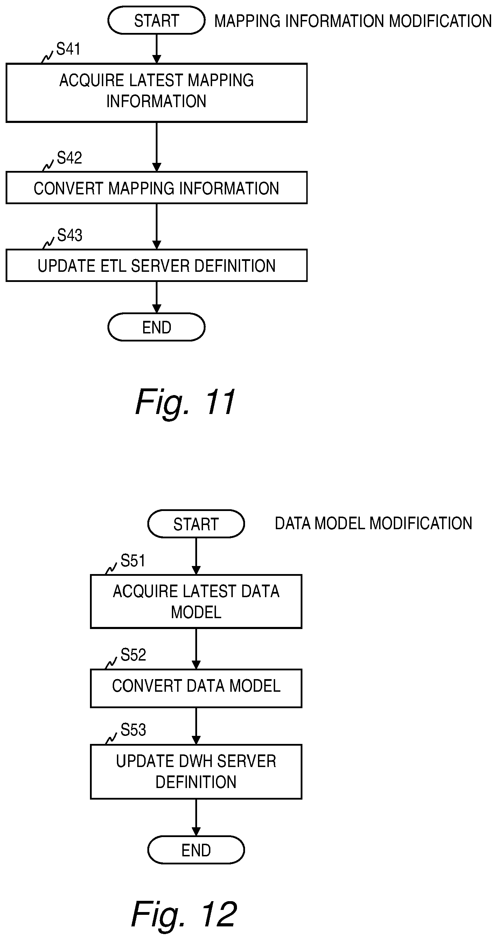

FIG. 11 is a flowchart for illustrating an example of processing of modifying the mapping information performed in the mapping information modification module 25.

In Step S41, the mapping information modification module 25 acquires the latest mapping information (for example, the mapping information checked or modified by the user on the data specification change screen 100 of FIG. 7) from the mapping information storage module 33.

Next, in Step S42, the mapping information modification module 25 converts the latest mapping information into a definition of the ETL processing in accordance with the specification of the processing of the update destination ETL server 2. The reflection of the latest mapping information in the ETL processing definition may be performed, for example, by using a data mapping integration tool.

In Step S43, the mapping information modification module 25 transmits the converted ETL definition to the ETL server 2 to update the ETL definition content.

Through the processing described above, the definition of the ETL server 2 can be updated based on mapping information checked by the user.

FIG. 12 is a flowchart for illustrating an example of processing of modifying the data model performed in the data model modification module 26.

In Step S51, the data model modification module 26 acquires the latest data model (the data model checked or modified by the user on the data specification change screen 100 of FIG. 7) from the data model storage module 34.

In Step S52, the data model modification module 26 converts, in accordance with the specification of the input data of the update destination DWH 3, the information on the data model into a definition for updating the schema of DWH 3. The conversion of the schema definition may be performed, for example, by using a schema conversion tool. In Step S53, the data model modification module 26 transmits the converted definition for updating the schema to the DWH 3, and the schema of the DWH 3 is thus updated.

Through the processing described above, the schema of the DWH 3 can be updated based on a data model checked by the user.

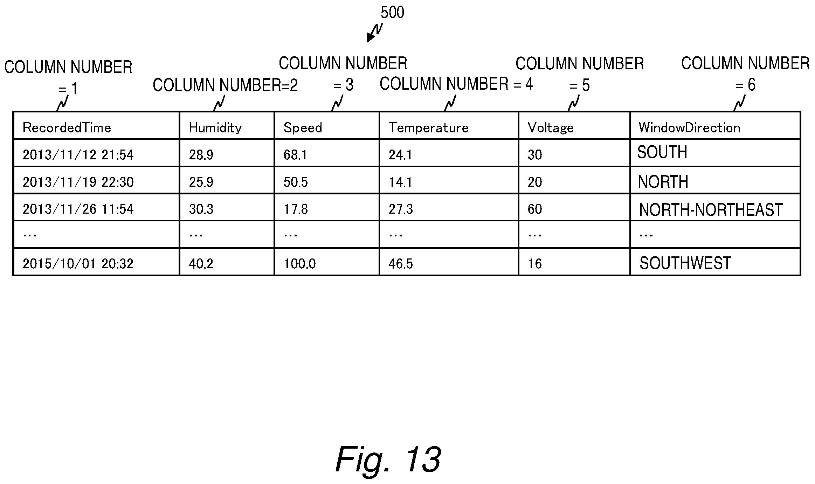

FIG. 13 is a table for showing an example of data 500 of the data source 1 to be analyzed by the data check server 5. The data 500 is data acquired by the data acquisition module 21 from the data source 1 and stored in the temporary storage area 31. The data 500 is the same as the data input by the ETL server 2. The ETL server 2 performs predetermined processing (for example, cleansing and mapping) on the data 500 to generate the input data (output destination data) of the DWH 3.

In the data 500, each entry stores a recording date and time in column number 1, a humidity in column number 2, a speed in column number 3, a temperature in column number 4, a voltage in column number 5, and a wind direction in column number 6.

FIG. 14 is a flowchart for illustrating an example of processing performed in the data meaning analysis module 22. This process is performed in Step S2 of FIG. 5.

The data meaning analysis module 22 reads the data included in one column of the data 500 from the temporary storage area 31 (Step S61). The data meaning analysis module 22 determines whether the type of the data in the column is a numerical value type, a character type, or a date and time type (Step S62).

In Step S63, the data meaning analysis module 22 advances the processing in accordance with the data type. The data meaning analysis module 22 advances the processing to Step S64 when the data type is a numerical value type, advances the processing to Step S65 when the data type is a character type, and advances the processing to Step S66 when the data type is a date and time type.

In Step S64, the data meaning analysis module 22 calculates the feature amount of the numeric value type column. In Step S65, the data meaning analysis module 22 calculates the feature amount of the character type column. In Step S66, the data meaning analysis module 22 calculates the feature amount of the date and time type column.

As the feature amount, for example, a feature amount (feature information) like the following can be used. For the numerical value type, for example, a statistical value such as a maximum value, a minimum value, an average value, and a variance, or a periodicity is calculated as the feature amount. For the character type, for example, a statistical value such as a maximum value, a minimum value, an average value, and a variance of a character string length, or a frequently-appearing character pattern and an appearance ratio of the pattern, is calculated as the feature amount. For the date and time type, for example, a statistical value such as a maximum value, a minimum value, an average value, and a variance relating to an interval is calculated as the feature amount. The examples described above of the feature amount are examples, and this invention is not limited to those examples.

The data meaning analysis module 22 determines whether or not there is an unprocessed column in the data 500. When there is an unprocessed column, the processing advances to Step S68, and when all of the columns have been processed, the processing advances to Step S69 (Step S67).

When there is a remaining column, the data meaning analysis module 22 advances the processing to the next column (Step S68), returns to Step S61, and executes the processing described above on the applicable column. Meanwhile, when there is no remaining column, the data meaning analysis module 22 stores the feature amount calculated as described above in the data meaning storage module 32 as a feature amount table 700 showing the meaning of the data of this time (Step S69).

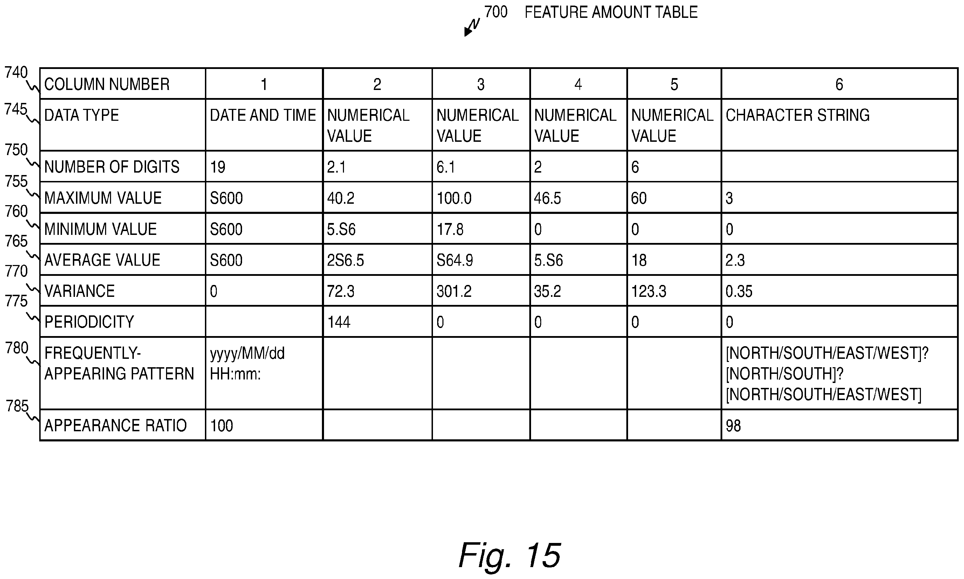

FIG. 15 is a table for showing an example of the feature amount table 700 of the data meaning storage module 32. The feature amount table 700 includes, for each column number 740 of the data 500, a data type 745 storing the determination result of the data type, a number of digits 750 indicating a length of the data, a maximum value 755, a minimum value 760, an average value 765, a variance 770, a periodicity 775, a frequently-appearing pattern 780, and an appearance ratio 785.

The column number 740 stores the column number of the data 500 shown in FIG. 13. The number of digits 750 stores the number of digits of numerical type data, the character string length of character type data, and the character string length of date and time type data.

The maximum value 755 stores the maximum value of numerical type data, the maximum value of the character string lengths of character type data, and the maximum value of the time intervals of date and time type data. The minimum value 760 stores the minimum value of numerical value type data, the minimum value of the character string lengths of character type data, and the minimum value of the time intervals of date and time type data.

The average value 765 stores the average value of the values of numerical type data, the average value of the character string lengths of character type data, and the average value of the time intervals of the date and time type data.

The variance 770 stores the variance of the values of numerical type data, the variance of the character string lengths of character type data, and the variance of the time intervals of date and time type data.

The periodicity 775 stores the periodicity of numerical value type data. The frequently-appearing pattern 780 stores the pattern frequently appearing in character type data or the format of date and time type data. The appearance ratio 785 stores the appearance ratio of data applicable to the format of the frequently-appearing pattern 780.

The feature amount of column number 1 stores the fact that the data type 745 is date and time type data. The frequently-appearing pattern 780 stores the format of the date and the character string, and the corresponding character string is stored in the number of digits 750.

The appearance ratio 785 stores the ratio at which data matching the pattern of the frequently-appearing pattern 780 appears. An appearance ratio 785 of 100% means that all the data is stored in that format. The maximum value 755 to the average value 765 are evenly spaced at intervals of 600 seconds (10 minutes).

Column numbers 2 to 5 show an example in which the feature amount of numerical value data is stored. The integer part of the numerical value stored in the number of digits 750 indicates the number of digits of the integer part of the data value of the column, and the decimal part represents the number of digits of the decimal part of the data value of the column. For example, the number of digits 750 in the column of column number 2 is "2.1", which indicates that the value of the data stored in column number 2 is two digits in the integer part and one digit in the decimal part. When the number of digits is not constant, a value is not stored in the number of digits 750.

In the periodicity 775 of column number 2, "144" is input, and therefore column number 2 indicates that data having a periodicity every 144 pieces of data is input. When there is no periodicity, "0" is input.

Column number 6 shows an example in which the feature amount of character type data is stored. When the character string length is fixed, the character string length is stored in the number of digits 750, but when the character string length is variable, no value is input.

Further, the maximum value 755 to the variance 770 of column number 6 store the maximum, minimum, average, and variance of the character string length. The periodicity is stored in the periodicity 775, but "0" is stored when there is no periodicity. The frequently-appearing pattern 780 stores, in the form of a regular expression, patterns which frequently appear. The appearance ratio 785 stores the ratio of data matching the pattern of the frequently-appearing pattern 780. Column number 6 shows that 98% of the data matches the pattern of frequently-appearing pattern 780.

FIG. 16 is a flowchart for illustrating an example of processing performed in the data specification change detection module 23. This processing is the processing of detecting a difference in the meaning of the data performed in Step S3 of FIG. 5.

The data specification change detection module 23 accesses the data meaning storage module 32 and acquires the meaning (feature amount) of the data of one column from the feature amount table 700 showing the meaning of the this-time data 500 (Step S1305).

Further, the data specification change detection module 23 accesses the data meaning storage module 32 and acquires the feature amount indicating the meaning of the data of the same column of the last-time data 500 (Step S1310).

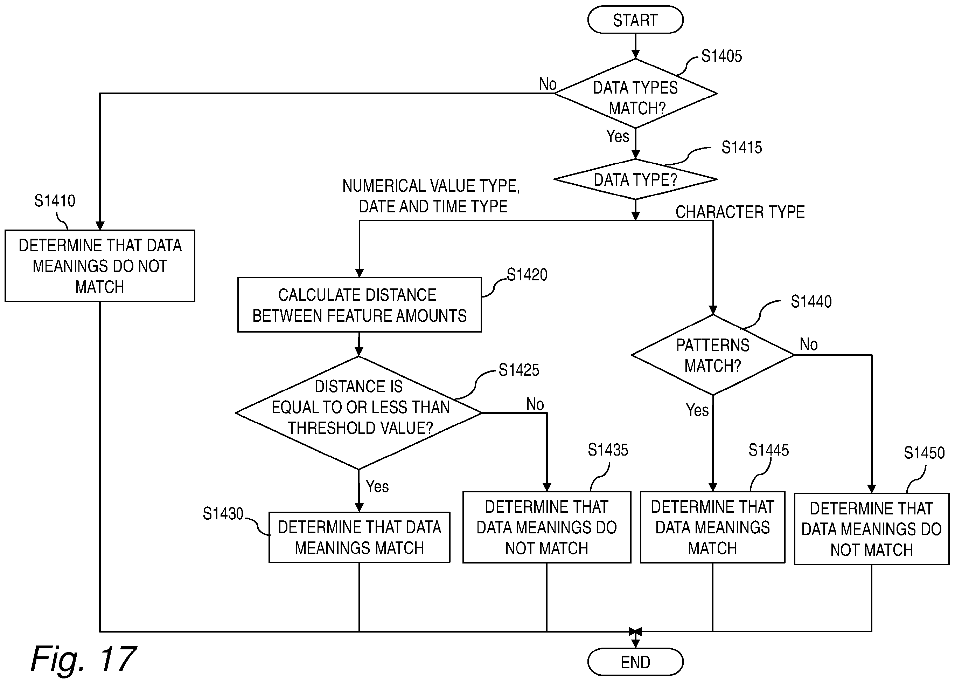

In Step S1315, the data specification change detection module 23 compares the meaning (feature amount) of the acquired this-time data with the meaning (feature amount) of the data of the same column of the last-time data, and determines whether or not the feature amounts match. The determination regarding whether or not the feature amounts match is described in detail with reference to FIG. 17.

When the meanings (feature amounts) of the data match in Step S1315, the data specification change detection module 23 determines in Step S1320 that there is "no change to the column." Meanwhile, when the meanings of the data do not match in Step S1315, the data specification change detection module 23 shifts the processing to Step S1325.

In Step S1325, the data specification change detection module 23 compares the meaning (feature amount) of the data of, among the last-time data, all of the columns other than the column acquired in Step S1310 with the meaning of the data of the column of the this-time data acquired in Step S1305. Then, in Step S1330, the data specification change detection module 23 determines whether or not the meaning (feature amount) of the data of the other columns matches the meaning (feature amount) of the this-time column data. The determination regarding whether or not the meanings match is performed in the same manner as in Step S1315.

In the determination of Step S1330, when there is another column which matches, the data specification change detection module 23 determines that the column is to be switched (Step S1335), and when there is not another column which matches, the data specification change detection module 23 determines that the column is to be added (Step S1340).

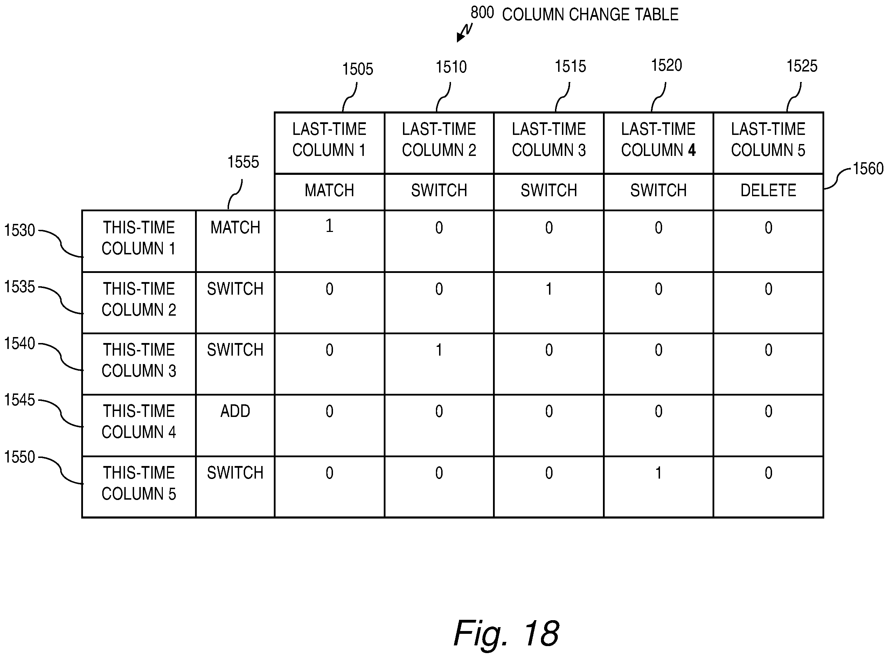

Based on the determination result of no change to the column, switching of the column, or addition of the column in Step S1320, Step S1335, and Step S1340, the data specification change detection module 23 records in a column change table 800 which column of this-time data the column of the last-time data corresponds to, or whether the column of the last-time data is to be newly added (Step S1345). The column change table 800 is stored in the data meaning storage module 32, and is described later with reference to FIG. 18.

Next, the data specification change detection module 23 accesses the feature amount table 700 of the data meaning storage module 32 and determines whether or not there is, of the this-time data, a column which has not been processed yet (Step S1350).

When there is a column that has not been processed yet, the data specification change detection module 23 advances the processing to Step S1355 to shift the processing to the next column, returns to the above-mentioned Step S1305, and repeats the processing described above.

Meanwhile, when it is determined in Step S1350 that there is not a remaining column, the data specification change detection module 23 refers to the column change table 800 recorded in Step S1345, and acquires the correspondence relationship of columns of the this-time data and the last-time data (Step S1360).

Next, in Step S1365, the data specification change detection module 23 determines whether or not, among the columns of the last-time data, there is a column not associated with the this-time data (Step S1365). When there are no columns not associated with the this-time data among the columns of the last-time data (when there are no columns which have been deleted), the data specification change detection module 23 ends the processing as it is.

Meanwhile, when there is a column not associated with the this-time data among the columns of the last-time data, the data specification change detection module 23 determines that the non-associated column has been deleted from the this-time data (Step S1370), and adds information indicating the deletion to the column change table 800 recorded in Step S1345 (Step S1375), and ends the processing.

Through the processing described above, by comparing the value of the feature amount table 700 of the this-time data with the value of the feature amount table 700 of each column of the last-time data 500, changes to each column are detected and recorded in the column change table 800.

FIG. 17 is a flowchart for illustrating an example of determination processing for matching of the meanings (feature amounts) of data performed in the data specification change detection module 23. This processing is performed in Step S1315 and Step S1330 of FIG. 16.

The data specification change detection module 23 refers to the feature amount tables 700 and determines whether or not the data type 745 of the column of the last-time data and the data type 745 of the column of the this-time data match (Step S1405). When the data types 745 match, the data specification change detection module 23 advances the processing to Step S1415. When the data types 745 do not match, the data specification change detection module 23 determines that the meanings (feature amounts) of the data do not match (Step S1410), and ends the processing.

When it is determined in Step S1405 that the data types 745 match, in Step S1415, the data specification change detection module 23 advances the processing in accordance with the data type. The data specification change detection module 23 advances the processing to Step S1420 when the data type 745 is a numerical value type or a date and time type, and advances the processing to Step S1440 when the data type is a character type (Step S1415).

In Step S1420, the data specification change detection module 23 calculates a distance between feature amounts in a feature amount space of the feature amount table 700 of the this-time data and the feature amount table 700 of the last-time data. The distance between the feature amounts may be calculated values of from the maximum value of 755 to the variance 770 by a publicly-known or well-known method, for example, a geometric distance.

In Step S1425, the data specification change detection module 23 determines whether or not the distance is equal to or less than a predetermined threshold value. When the distance is equal to or less than the threshold value, the processing advances to Step S1430, and the data specification change detection module 23 determines that the meanings (feature amounts) of the last-time column data and the this-time column data match. Meanwhile, when the distance exceeds the threshold value, the processing advances to Step S1435, and the data specification change detection module 23 determines that the meanings (feature amounts) of the last-time column data and the this-time column data do not match.

In Step S1440 of the character type, the data specification change detection module 23 determines whether or not the frequently-appearing patterns 780 match from the feature amount table 700 of the this-time data and the feature amount table 700 of the last-time data.

When the frequently-appearing patterns 780 match, the processing advances to Step S1445, and the data specification change detection module 23 determines that the meanings (feature amounts) of the last-time column data and the this-time column data match. Meanwhile, when the frequently-appearing patterns 780 do not match, the processing advances to Step S1450, and the data specification change detection module 23 determines that the meanings (feature amounts) of the last-time column data and the this-time column data do not match.

Through the processing described above, it is determined whether or not the column of the this-time data and the column of the last-time data are the same based on the feature amounts of the columns.

FIG. 18 is a table for showing an example of the column change table 800 to be used by the data specification change detection module 23. The column change table 800 is recorded in Step S1345 and Step S1375 of FIG. 16, and is stored in the data meaning storage module 32.

In the column change table 800, the columns of the last-time data are arranged in the horizontal direction (1505 to 1525) and the columns of the this-time data are arranged in the vertical direction (1530 to 1550).

When the data specification change detection module 23 determines in Step S1320 of FIG. 16 that there is no change to the column, the number "1" is entered in a cell in which the column of the this-time data and the samenumbered column of the last-time data intersect, and the number "0" is entered in cells other than the cell. Further, the data specification change detection module 23 records "match" in the field of the column 1555 adjacent to the columns 1530 to 1550 of the this-time data column and in the field of the row 1560 of the corresponding last-time data.

When the data specification change detection module 23 determines in Step S1335 of FIG. 16 that the column is to be switched, the number "1" is entered in a cell in which the column of the this-time data and the samenumbered column of the last-time data intersect, and the number "0" is entered in cells other than the cell. Further, the data specification change detection module 23 records "switch" in the column 1555 adjacent to the columns of the this-time data column and in the row 1560 of the corresponding last-time data.

When the data specification change detection module 23 determines in Step S1340 of FIG. 16 that the column is to be added, the number "0" is entered in all the cells in the row of the this-time data column, and "add" is recorded in the field of the column 1555.

In Step S1360, the data specification change detection module 23 acquires the row 1560 of the column change table 800. When there is a column in which "match" or "switch" is not recorded, in Step S1365 of FIG. 16, the data specification change detection module 23 determines that there is no corresponding column of the this-time data, and in Step S1370, determines that the column has been deleted. In Step S1375 of FIG. 16, the data specification change detection module 23 records "deleted" in the field of the column 1555 of the corresponding last-time column.

Through reference to the column change table 800, the data specification change detection module 23 can determine a difference between the last-time data and the this-time data.

As described above, in the first embodiment, the data check server 5 can detect a specification change in the data source 1, for example, addition, update, or deletion of a column, by analyzing the meaning of the data acquired from the data source 1 as a feature amount.

Further, the data specification change notification module 24 can present a modification proposal for the mapping information and a modification proposal for the data model to the user-operated PC 7 in accordance with the content of the change to the column, and hence maintenance of the ETL server 2 and the DWH 3 can be easily performed.

### [Second Embodiment]

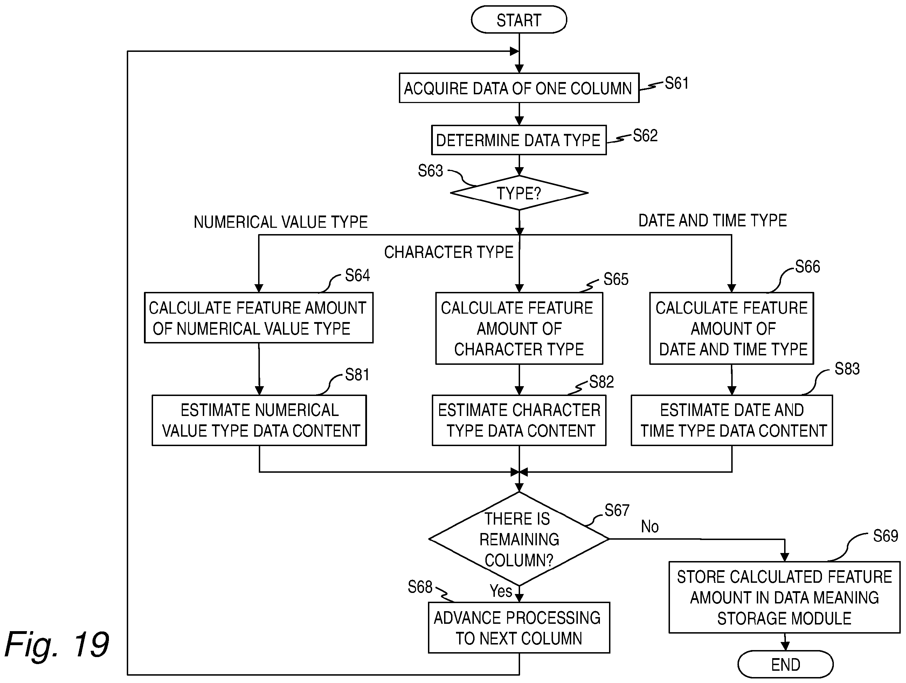

FIG. 19 to FIG. 23 are illustrations of a second embodiment of this invention, in which a machine learning module is added to the data meaning analysis module 22 to estimate the meaning (content) of the column data. The other parts of the second embodiment are the same as those described in the first embodiment.

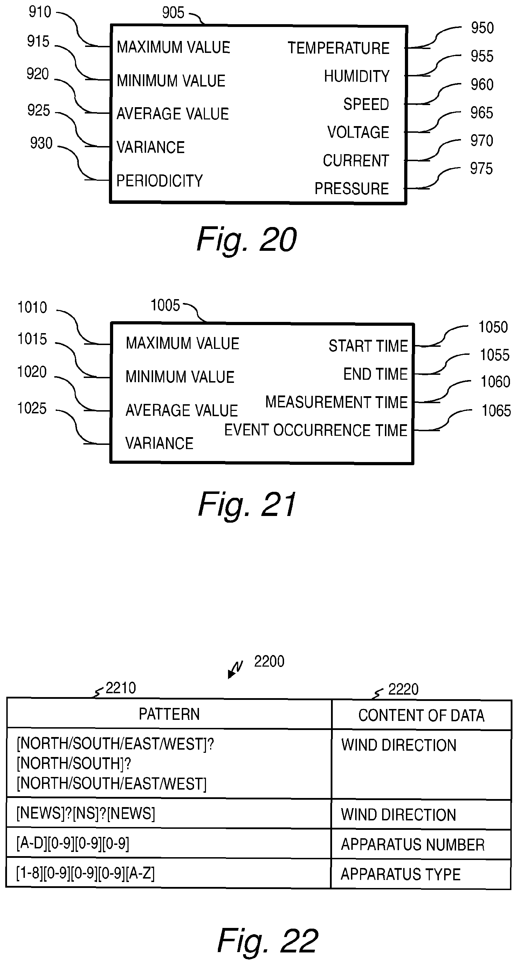

The data meaning analysis module 22 in the second embodiment includes machine learning modules 905 and 1005 which are illustrated in FIG. 20 and FIG. 21, and is different from the first embodiment in that the content of the data is added to the feature amount table 700.

FIG. 19 is a flowchart for illustrating an example of processing performed in the data meaning analysis module 22. This processing is the processing of analyzing the meaning of the data performed in Step S2 of FIG. 5 in the first embodiment. In the flowchart, Step S61 to Step S69 are the same as in the first embodiment, but there is a difference in that Step S81, Step S82, and Step S83 for estimating the content of the data are added after the calculation of the feature amount.

The data meaning analysis module 22 advances the processing to Step S64 when the data type is a numerical value type, calculates the feature amount of the numerical value type column, and writes the calculated feature amount in the feature amount table 700. Then, in Step S81, the data meaning analysis module 22 inputs the calculated feature amount into the machine learning module 905 (FIG. 20) to calculate an estimated value of the data content. The data meaning analysis module 22 stores the estimated value of the data content in the feature amount table 700.

In Step S82, the data meaning analysis module 22 refers to a data pattern 1200 set in advance from the character type feature amount calculated in Step S65, acquires the estimated value of the data content, and stores the acquired estimated value in the feature amount table 700.

In Step S83, the data meaning analysis module 22 inputs the date and time type feature amount calculated in Step S66 into the machine learning module 1005 (FIG. 21) to calculate the estimated value of the data content, and stores the calculated estimated value in the feature amount table 700.

FIG. 20 is a diagram for illustrating an example of the machine learning module 905 configured to estimate the content of data for numerical value type data.

In Step S81 of FIG. 19, the feature amount is input to the machine learning module 905 to estimate the content of the column data. An example of using a neural network is illustrated as the machine learning module 905, but a publicly-known or well-known pattern recognition technology, for example, Bayesian estimation, can be used.

The machine learning module 905 includes input sections (910 to 930) and output sections (950 to 975). The input sections (input elements) include a maximum value 910, a minimum value 915, an average value 920, a variance 925, and a periodicity 930. The output sections (output elements) include a temperature 950, a humidity 955, a speed 960, a voltage 965, a current 970, and a pressure 975.

The machine learning module 905 uses the feature amount of data having a known data content, and learns such that, when the feature amount is input, the corresponding output section outputs a value of 1 and the other output sections output a value of 0.

In Step S81 of FIG. 19, the feature amount calculated in Step S64 is input to the trained machine learning module 905, and the output of each output section is obtained. When the maximum value of the output is equal to or greater than a threshold value set in advance, the content of the data corresponding to the output section which output that output value is used as the estimation result of the machine learning module 905. When the maximum value is less than or equal to the threshold value, the machine learning module 905 does not output the content of the corresponding data.

FIG. 21 is a diagram for illustrating an example of the machine learning module 1005 configured to estimate the content of data for date and time type data.

In Step S83 of FIG. 19, the feature amount is input to a trained machine learning module 1005 to estimate the content of the column data. An example of using a neural network is illustrated as the machine learning module 1005, but a publicly-known or well-known pattern recognition technology, for example, Bayesian estimation, can be used.

The machine learning module 1005 includes input sections (input elements) 1010 to 1025 and output sections (output elements) 1050 to 1065. The input sections include a maximum value 1010, a minimum value 1015, an average value 1020, and a variance 1025. The output sections include a start time 1050, an end time 1055, a measurement time 1060, and an event occurrence time 1065.

The feature amount calculated in Step S66 of FIG. 19 is given to each corresponding input section, and the estimation result is obtained from the output section. The machine learning module 1005 uses the feature amount of data having a known data content, and learns such that, when the feature amount is input, the corresponding output section outputs a value of 1 and the other output sections output a value of 0.

In Step S83 of FIG. 19, the feature amount calculated in Step S66 is input to the trained machine learning module 1005, and the output of each output section is obtained. As a result, the data meaning analysis module 22 can obtain the estimated value of the content of date and time type data.

FIG. 22 is a table for showing an example of a character type data pattern 2200. In Step S82 of FIG. 19, as an example of the method in which the data content of character string type data is estimated, the data meaning analysis module 22 sets in advance, in the data pattern 2200, pairs of content of character type data and a character string pattern for that data content.

Then, the data meaning analysis module 22 compares the patterns set in the data pattern 1200 with the frequently-appearing pattern 780 obtained as the feature amount of the character string type data in Step S65, and estimates the data content.

The data pattern 2200 of FIG. 22 shows an example of pairs of a data pattern 2210 set in advance and a data content 2220. The pattern of the character string is recorded in the pattern 2210, and the meaning of the data corresponding to each pattern is recorded in the data content 2220.

In Step S65 of FIG. 19, the data meaning analysis module 22 calculates frequently-appearing patterns 780 in the form of a regular expression as feature amounts of the character string type data. Then, the data meaning analysis module 22 compares the calculated frequently-appearing patterns 780 in the form of a regular expression with the patterns stored in the pattern 2210 and identifies a matching pattern. The data meaning analysis module 22 uses the content of the data stored in the data content 2220 as the estimation result for the matched pattern 2210. When there is no matching pattern, the data meaning analysis module 22 determines that there is no corresponding data content.

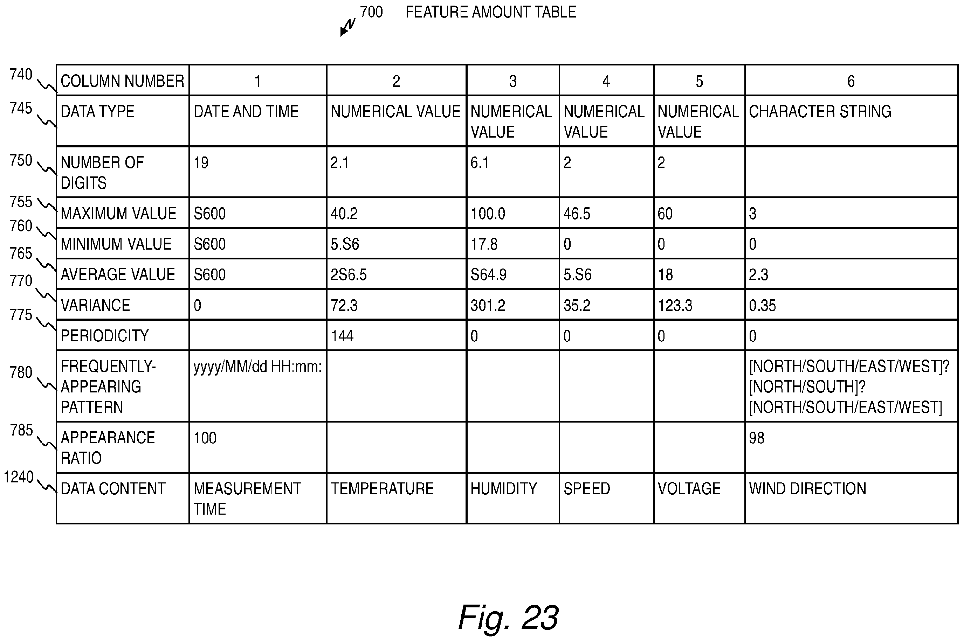

FIG. 23 is a table for showing an example of the feature amount table 700. This feature amount table 700 is different from that in the first embodiment in that a row of a data content 1240 is newly added to FIG. 15 in the first embodiment.

The data meaning analysis module 22 stores the contents of the data estimated in Step S81, Step S82, and Step S83 of FIG. 19 in the data contents 1240. In the first embodiment, the matching of the columns illustrated in FIG. 16 is determined based on the feature amount and the threshold value, but in the second embodiment, this determination may be performed by determining whether or not the data content 1240 of the column matches the last-time data and the this-time data. As a result, it is possible to improve the accuracy of determining the presence or absence of a change to each column between the last-time data and the this-time data.

### <Summary>

As described above, according to each of the first and second embodiments, there is provided a data management method, in which a computer (data check server 5) including a processor (11) and a memory (14) is configured to detect occurrence of a change to data of a data source (1). The data management method includes: a first step (Step S1) of acquiring, by the computer (5), data from the data source (1); a second step (Step S2) of analyzing, by the computer (5), a meaning of the acquired data on a column-by-column basis and storing, by the computer (5), an analysis result of this time in a meaning storage module (data meaning storage module 32); a third step (Step S3) of acquiring, by the computer (5), an analysis result of a last time of the columns from the meaning storage module (32); a fourth step (Step S4) of comparing (Step S3), by the computer (5), the analysis result of the last time with the analysis result of this time and determining, by the computer (5), that a change to the data has occurred when a difference exists between the analysis results; and a fifth step (Step S5) of outputting, by the computer (5), when it is determined that a change to the data has occurred, the occurrence of the change and a content of the difference.

As a result, the data check server 5 can detect a specification change, for example, an addition, update, or deletion of a column in the data source 1 by analyzing the meaning of the data acquired from the data source 1 as a feature amount.

Further, the second step (Step S2) includes calculating a feature amount of the data is calculated on a column-by-column basis as the meaning of the data, and storing the calculated feature amount in the meaning storage module (32) as the analysis result of this time. As a result, the data meaning analysis module 22 calculates a feature amount on a column-by-column basis of the data source 1 and accumulates the calculated feature amount in the data meaning storage module 32, and thus the data specification change detection module 23 can detect a change to the specification of the same column.

Further, the fourth step includes calculating a distance between the feature amount of this time and the feature amount of the last time (S1420), and determining that a change to the data has occurred when the distance is larger than a threshold value set in advance (Step S1425) (Step S1435).

As a result, the data specification change detection module 23 can detect a change to the data on a column-by-column basis by comparing the feature amount of this time with the feature amount of the last time based on a predetermined threshold value.

Further, the second step includes calculating the feature amount of the data on a column-by-column basis as the meaning of the data, inputting the calculated feature amount to a machine learning module (905, 1005) trained in advance to estimate the content of the data, and storing an estimation result of the machine learning module (905, 1005) in the meaning storage module (32) as the analysis result of this time.

As a result, the occurrence of changes to the columns can be detected by the data meaning analysis module 22 inputting a feature amount on a column-by-column basis into the machine learning modules 905 and 1005 to estimate the content of the data, and by the data specification change detection module 23 determining whether or not the estimation results match or do not match.

Further, the data management method further includes a sixth step (Step S204) of updating, by the computer (5), in accordance with the content of the difference, mapping information obtained by aggregating the data of the data source 1 for generating output data, and transmitting, by the computer (5), the updated mapping information to a server configured to execute the aggregation of the data.

As a result, the mapping information modification module 25 of the data check server 5 can notify the ETL server 2 executing the data aggregation of the mapping information updated based on the content of the change to the data.

This invention is not limited to the embodiments described above, and encompasses various modification examples. For instance, the embodiments are described in detail for easier understanding of this invention, and this invention is not limited to modes that have all of the described components. Some components of one embodiment can be replaced with components of another embodiment, and components of one embodiment may be added to components of another embodiment. In each embodiment, other components may be added to, deleted from, or replace some components of the embodiment, and the addition, deletion, and the replacement may be applied alone or in combination.

Some of all of the components, functions, processing units, and processing means described above may be implemented by hardware by, for example, designing the components, the functions, and the like as an integrated circuit. The components, functions, and the like described above may also be implemented by software by a processor interpreting and executing programs that implement their respective functions. Programs, tables, files, and other types of information for implementing the functions can be put in a memory, in a storage apparatus such as a hard disk, or a solid state drive (SSD), or on a recording medium such as an IC card, an SD card, or a DVD.

The control lines and information lines described are lines that are deemed necessary for the description of this invention, and not all of control lines and information lines of a product are mentioned. In actuality, it can be considered that almost all components are coupled to one another.

## Claims

1. A data management method, in which a computer including a processor and a memory is configured to detect occurrence of a change to data of a data source, the data management method comprising:
a first step of acquiring, by the computer, data from the data source;
a second step of analyzing, by the computer, a meaning of the acquired data on a column-by-column basis and storing, by the computer, an analysis result of this time in a meaning storage module;
a third step of acquiring, by the computer, an analysis result of a last time of the columns from the meaning storage module;
a fourth step of comparing, by the computer, the analysis result of the last time with the analysis result of this time and determining, by the computer, that a change to the data has occurred when a difference exists between the analysis results; and
a fifth step of outputting, by the computer, when it is determined that a change to the data has occurred, the occurrence of the change and a content of the difference.

2. The data management method according to claim 1, wherein the second step comprises calculating a feature amount of the data on a column-by-column basis as the meaning of the data, and storing the calculated feature amount in the meaning storage module as the analysis result of this time.

3. The data management method according to claim 2, wherein the fourth step comprises calculating a distance between the feature amount of this time and the feature amount of the last time, and determining that a change to the data has occurred when the distance is larger than a threshold value set in advance.

4. The data management method according to claim 2, wherein the second step comprises calculating a feature amount of the data on a column-by-column basis as the meaning of the data, inputting the feature amount to a machine learning module trained in advance to estimate the content of the data, and storing an estimation result of the machine learning module in the meaning storage module as the analysis result of this time.

5. The data management method according to claim 1, further comprising a sixth step of updating, by the computer, in accordance with the content of the difference, mapping information obtained by aggregating the data of the data source for generating output data, and transmitting, by the computer, the updated mapping information to a server configured to execute the aggregation of the data.

6. A data management system, in which a computer including a processor and a memory is configured to detect occurrence of a change to data of a data source, the data management system comprising:
a data acquisition module configured to acquire data from the data source;
a data meaning analysis module configured to analyze a meaning of the acquired data on a column-by-column basis, and to store an analysis result of this time in a meaning storage module;
a data specification change detection module configured to acquire an analysis result of a last time of the columns from the meaning storage module, compare the analysis result of the last time with the analysis result of this time, and to determine that a change to the data has occurred when a difference exists between the analysis results; and
a data specification change notification module configured to output, when it is determined that a change to the data has occurred, the occurrence of the change and a content of the difference.

7. The data management system according to claim 6, wherein the data meaning analysis module is configured to calculate a feature amount of the data on a column-by-column basis as the meaning of the data, and to store the calculated feature amount in the meaning storage module as the analysis result of this time.

8. The data management system according to claim 7, wherein the data specification change detection module is configured to calculate a distance between the feature amount of this time and the feature amount of the last time, and to determine that a change to the data has occurred when the distance is larger than a threshold value set in advance.

9. The data management system according to claim 7, wherein the data meaning analysis module is configured to calculate a feature amount of the data on a column-by-column basis as the meaning of the data, input the feature amount to a machine learning module trained in advance to estimate the content of the data, and to store an estimation result of the machine learning module in the meaning storage module as the analysis result of this time.

10. The data management system according to claim 6, wherein the computer is configured to update, in accordance with the content of the difference, mapping information obtained by aggregating the data of the data source for generating output data, and to transmit the updated mapping information to a server configured to execute the aggregation of the data.

11. A program for causing a computer including a processor and a memory to detect occurrence of a change to data of a data source, the program being configured to cause the computer to execute:
a first step of acquiring data from the data source;
a second step of analyzing a meaning of the acquired data on a column-by-column basis and storing an analysis result of this time in a meaning storage module;
a third step of acquiring an analysis result of a last time of the columns from the meaning storage module;
a fourth step of comparing the analysis result of the last time with the analysis result of this time and determining that a change to the data has occurred when a difference exists between the analysis results; and
a fifth step of outputting, when it is determined that a change to the data has occurred, the occurrence of the change and a content of the difference.
